# EUROPEAN PATENT APPLICATION

(11) **EP 4 424 543 A1**
(43) Date of publication of application: **04.09.2024**
(21) Application number: 21969318.1
(22) Date of filing: 28.12.2021
(51) Int. Cl.: B60L 53/00, H02J 7/00

(54) **BATTERY CHARGING CIRCUIT AND METHOD, DEVICE, AND STORAGE MEDIUM**

(71) Applicant: Contemporary Amperex Technology Co., Limited, Ningde, Fujian 352100 (CN)
(72) Inventor: LI, Xiangtao, Ningde, Fujian 352100 (CN); LI, Bao, Ningde, Fujian 352100 (CN); WU, Kai, Ningde, Fujian 352100 (CN)
(74) Representative: Gong, Jinping
(86) International application number: PCT/CN2021/141965
(87) International publication number: WO 2023/122937

(57) **Abstract**

The application provides a battery charging circuit, applicable to an electric vehicle. The battery charging circuit includes a bidirectional vehicle-mounted charging module; a first loop switch module, configured to, once turned on, electrically connect a direct current charging interface of a charging pile to a first end of the bidirectional vehicle-mounted charging module, and a second end of the bidirectional vehicle-mounted charging module to a battery pack of the electric vehicle, when the charging pile is charging the electric vehicle; a second loop switch module, configured to, once turned on, electrically connect the direct current charging interface of the charging pile to the battery pack of the electric vehicle, when the charging pile is charging the electric vehicle; the bidirectional vehicle-mounted charging module, configured to boost a direct current voltage output by the charging pile to be higher than a preset voltage; and a control module, configured to control the first loop switch module to be turned on or the second loop switch module to be turned on, according to the direct current voltage of the charging pile.

## Description

### TECHNICAL FIELD

The present application relates to the technical field of batteries, and more particularly to a battery charging circuit, method, device and storage medium.

### BACKGROUND

With the development of new energy technology, batteries are more and more widely used, especially in new energy vehicles. In order to achieve rapid battery charging, manufacturers of new energy vehicles have gradually strengthened the construction of battery charging platforms, resulting in the emergence of high-voltage charging platforms. However, charging piles adapted to the high-voltage charging platforms are not fully widespread, so there is a requirement for batteries in vehicles to adapt to charging piles of various voltage platform specifications on the market.

Most of the conventionally arranged charging piles belong to low-voltage platforms, such as platforms of 400 Volts (V), and the output charging voltages are relatively low, while the existing electric vehicles typically employ high-voltage systems, such as architectures of 800 V. In order to enable a high-voltage platform electric vehicle to access a low-voltage platform charging pile for charging normally, a solution in the relevant art is to provide a boost module between a charging port of the electric vehicle and a battery pack so as to boost the voltage of the charging pile. However, in order to be compatible with the low-voltage platform charging pile, a separate boost module should be provided in the electric vehicle, resulting in an increase in the cost of the whole vehicle. Furthermore, the provision of the additional module also leads to increased complexity of a battery management system.

### SUMMARY

Embodiments of the present application provide a battery charging circuit, method, device and storage medium, to solve the problem of increased costs incurred by providing a boost module in an electric vehicle (such as, an automobile) to boost a voltage of a charging pile.

In a first aspect, the present application provides a battery charging circuit, applicable to an electric vehicle, the battery charging circuit including:
a bidirectional vehicle-mounted charging module;
a first loop switch module, configured to, once turned on, electrically connect a direct current charging interface of a charging pile to a first end of the bidirectional vehicle-mounted charging module, and a second end of the bidirectional vehicle-mounted charging module to a battery pack of the electric vehicle, when the charging pile is charging the electric vehicle;
a second loop switch module, configured to, once turned on, electrically connect the direct current charging interface of the charging pile to the battery pack of the electric vehicle, when the charging pile is charging the electric vehicle;
the bidirectional vehicle-mounted charging module, configured to boost a direct current voltage output by the charging pile to be higher than a preset voltage; and
a control module, configured to control the first loop switch module to be turned on or the second loop switch module to be turned on, according to the direct current voltage of the charging pile.

By boosting the direct current voltage of the charging pile via a boost function of the bidirectional vehicle-mounted charging module, when the electric vehicle is connected to a low voltage charging platform, the first loop switch module is turned on, the direct current low voltage can be boosted by the bidirectional vehicle-mounted charging module and then be used to charge the battery pack; and when the electric vehicle is connected to a high-voltage charging platform, the second loop switch module is turned on, so that the battery pack of the electric vehicle directly receives the direct current high voltage for charging. The electric vehicle can be charged in both the high-voltage charging platform and the low-voltage charging platform without any additional boost module being provided, so that the electric vehicle can be charged by different charging platforms. Also, it is possible to reduce the overall vehicle cost of the electric vehicle and reduce the complexity of the battery management system, since no additional boost module is added.

In an optional embodiment, the bidirectional vehicle-mounted charging module includes an alternating current (AC)/direct current (DC) conversion module and a DC/DC conversion module connected in series, and the AC/DC conversion module includes a direct current boost sub-module; the first end of the bidirectional vehicle-mounted charging module is an input end or an output end of the AC/DC conversion module.

The bidirectional vehicle-mounted charging module is specifically configured to detect an input end voltage and an output end voltage of the AC/DC conversion module, so as to turn on or off the direct current boost sub-module of the AC/DC conversion module according to the input end voltage and the output end voltage. The direct current boost sub-module can be controlled to be turned on or off according to whether the AC/DC conversion module is connected into the boost circuit, so as to realize compatible adaptation of the bidirectional vehicle-mounted charging module under different topologies.

In an optional embodiment, the input end of the AC/DC conversion module is configured to connect to the direct current charging interface of the charging pile, the output end of the AC/DC conversion module is connected to an input end of the DC/DC conversion module, an output end of the DC/DC conversion module is connected to the battery pack of the electric vehicle via the first loop switch module.

The bidirectional vehicle-mounted charging module is configured to detect the input end voltage and the output end voltage of the AC/DC conversion module, and boost, in a direct current mode, the direct current voltage sequentially by the direct current boost sub-module of the AC/DC conversion module and the DC/DC conversion module, when the input end voltage is lower than the preset voltage and the output end voltage is lower than the preset voltage. When it is detected that both the input end voltage and the output end voltage are lower than the preset voltage, it can be determined that the AC/DC conversion module is connected into the boost circuit, and the voltage is controlled to be boosted by both the direct current boost sub-module and the DC/DC conversion module.

In an optional embodiment, an input end of the DC/DC conversion module is configured to connect to the direct current charging interface of the charging pile, the input end of the DC/DC conversion module is connected to the output end of the AC/DC conversion module, and an output end of the DC/DC conversion module is connected to the battery pack of the electric vehicle via the first loop switch module.

The bidirectional vehicle-mounted charging module is configured to detect the input end voltage and the output end voltage of the AC/DC conversion module, and boost, in a direct current mode, the direct current voltage by the DC/DC conversion module, when the input end voltage is zero and the output end voltage is lower than the preset voltage. When it is detected that the input end voltage is zero and the output end voltage is lower than the preset voltage, it can be determined that the AC/DC conversion module is not connected into the boost circuit, and voltage is controlled to be boosted the DC/DC conversion module alone.

In an optional embodiment, a first electrode of the first end of the bidirectional vehicle-mounted charging module is connected to a first electrode of the direct current charging interface of the charging pile, and a second electrode of the first end of the bidirectional vehicle-mounted charging module is connected to a second electrode of the direct current charging interface of the charging pile. The positive and negative electrodes of the first end of the bidirectional vehicle-mounted charging module can be correspondingly connected to the positive and negative electrodes of the direct current charging interface so as to receive the direct current voltage output by the direct current charging interface.

In an optional embodiment, the first loop switch module includes:
a first contactor, via which, the first electrode of the first end of the bidirectional vehicle-mounted charging module is connected to the first electrode of the direct current charging interface of the charging pile;
a first relay, via which, a first electrode of the second end of the bidirectional vehicle-mounted charging module is connected to a first electrode of the battery pack; and
a second relay, via which, a second electrode of the second end of the bidirectional vehicle-mounted charging module is connected to a second electrode of the battery pack.

When the first loop switch module is turned on, the first contactor, the first relay and the second relay are closed. By controlling the corresponding relays and contactor to be closed, the first loop switch module can be turned on, so that the direct current voltage output by the direct current charging interface can charge the battery pack after being boosted by the bidirectional vehicle-mounted charging module.

In an optional embodiment, the second loop switch module includes:
a second contactor, via which, the first electrode of the direct current charging interface of the charging pile is connected to the first electrode of the battery pack; and
the second relay, via which, the second electrode of the direct current charging interface of the charging pile is connected to the second electrode of the battery pack.

When the second loop switch module is turned on, the second contactor and the second relay are closed. By multiplexing the relay in the first loop switch module, it is possible to turn on the second loop switch module with the decreased number of components of in the two loop switch modules, thereby reducing the component cost of the electric vehicle.

In a second aspect, an embodiment of the present application provides a battery charging method, applicable to the control module of the battery charging circuit as described above, the method including:
obtaining the direct current voltage output by the direct current charging interface of the charging pile, when the charging pile is charging the electric vehicle;
sending a boost charging request to the bidirectional vehicle-mounted charging module, and controlling the first loop switch module to be turned on, when the direct current voltage is lower than the preset voltage, so that the bidirectional vehicle-mounted charging module charges the battery pack after the boosting direct current voltage; and
controlling the second loop switch module to be turned on to charge the battery pack with the direct current voltage, when the direct current voltage is higher than the preset voltage. By boosting the direct current voltage of the charging pile via a boost function of the bidirectional vehicle-mounted charging module, when the electric vehicle is connected to a low voltage charging platform, the first loop switch module is turned on, the direct current low voltage can be boosted by the bidirectional vehicle-mounted charging module and then be used to charge the battery pack; and when the electric vehicle is connected to a high-voltage charging platform, the second loop switch module is turned on, so that the battery pack of the electric vehicle directly receives the direct current high voltage for charging. The electric vehicle can be charged in both the high-voltage charging platform and the low-voltage charging platform without any additional boost module being provided, so that the electric vehicle can be charged by different charging platforms. Also, it is possible to reduce the overall vehicle cost of the electric vehicle and reduce the complexity of the battery management system, since no additional boost module is added.

In a third aspect, an embodiment of the present application provides a battery charging method, applicable to the bidirectional vehicle-mounted charging module of the battery charging circuit as described above, the method including:
receiving a boost charging request sent by the control module;
boosting, in a direct current mode, the direct current voltage output by the direct current charging interface of the charging pile sequentially by a direct current boost sub-module of an AC/DC conversion module and a DC/DC conversion module, when the first end of the bidirectional vehicle-mounted charging module is an input end of the AC/DC conversion module; and
boosting, in the direct current mode, the direct current voltage output by the direct current charging interface of the charging pile by the DC/DC conversion module, when the first end of the bidirectional vehicle-mounted charging module is an output end of the AC/DC conversion module. Bidirectional vehicle-mounted charging modules of different topologies are enabled to boost the direct current voltage by detecting whether the AC/DC conversion module is located in the boost loop, so as to realize the adaptation of the bidirectional vehicle-mounted charging modules of different topologies.

In an optional embodiment, before boosting, in the direct current mode, the direct current voltage output by the direct current charging interface of the charging pile sequentially by the direct current boost sub-module of the AC/DC conversion module and the DC/DC conversion module, when the first end of the bidirectional vehicle-mounted charging module is the input end of the AC/DC conversion module, the method further includes:
obtaining an input end voltage and an output end voltage of the AC/DC conversion module;
determining that the first end of the bidirectional vehicle-mounted charging module is the input end of the AC/DC conversion module, when the input end voltage is lower than the preset voltage and the output end voltage is lower than the preset voltage; and
determining that the first end of the bidirectional vehicle-mounted charging module is the output end of the AC/DC conversion module, when the input end voltage is zero and the output end voltage is lower than the preset voltage. When the bidirectional vehicle-mounted charging module may have different topologies, a corresponding topology can be determined by detecting the voltage signals, so as to adapt the bidirectional vehicle-mounted charging module.

In a fourth aspect, an embodiment of the present application provides a battery charging device including: a processor and a memory having computer program instructions stored thereon.

The processor, when executing the computer program instructions, causes the battery charging device to implement the battery charging methods as described above.

In a fifth aspect, an embodiment of the present application provides a computer storage medium having computer program instructions stored thereon. The computer program instructions, when executed by an electronic device, cause the electronic device to implement the battery charging methods as described above.

The battery charging circuit provided by the embodiments of the present application can boost the direct current voltage of the charging pile via the bidirectional vehicle-mounted charging module. The control module can obtain the direct current voltage of the charging pile when the charging pile is connected to the charging port of the electric vehicle. When the direct current voltage of the charging pile satisfies the charging voltage requirement of the electric vehicle, the direct current charging interface of the charging pile can be connected directly to the battery pack to charge the battery pack. When the direct current voltage of the charging pile does not satisfy the charging voltage requirement of the electric vehicle, the battery pack can be charged by the direct current voltage after the direct current voltage is boosted via the bidirectional vehicle-mounted charging module. The direct current voltage of the charging pile can be boosted by the boost function in the bidirectional vehicle-mounted charging module, when the direct current voltage is lower than the preset voltage, so as to achieve normal charging by a low-voltage charging pile. In the case that the bidirectional vehicle-mounted charging module has already been provided within the electric vehicle, by using the bidirectional vehicle-mounted charging module, it is possible to avoid providing any additional boost module, thereby reducing the cost of the entire vehicle. Also, the complexity of the battery management system will not be increased, since no additional module is provided.

### BRIEF DESCRIPTION OF THE DRAWINGS

In order to illustrate technical solutions of the embodiments of the present application more clearly, a brief introduction of drawings to be used in the embodiments of the present application will be given below. Obviously, the drawings described below are only some embodiments of the present application, and for those having ordinary skills in the art, other drawings can be obtained according to the drawings without any inventive effort.
Fig. 1 is a schematic block diagram of a battery charging circuit provided by an embodiment of the present application;
Fig. 2 is a schematic circuit diagram of a battery charging circuit provided by an embodiment of the present application;
Fig. 3 is a schematic circuit diagram of a battery charging circuit provided by another embodiment of the present application;
Fig. 4 is a schematic flow diagram of a battery charging method provided by an embodiment of the present application;
Fig. 5 is a schematic flow diagram of a battery charging method provided by another embodiment of the present application;
Fig. 6 is a schematic flow diagram of a battery charging method provided by a further embodiment of the present application; and
Fig. 7 is a schematic structure diagram of a battery charging device provided by an embodiment of the present application.

Figures in the drawings are not necessarily drawn to actual scale.

Reference numerals in the detailed description are as follows:
10, bidirectional vehicle-mounted charging module; 11, AC/DC conversion module; 12, DC/DC conversion module; 20, first loop switch module; 30, second loop switch module; 40, control module; 50, direct current charging interface; 60, battery pack; K1, first contactor; K2, second contactor; S 1, first relay; S2, second relay.

### DETAILED DESCRIPTION

The embodiments of the technical solutions of the present application will be described in details below combined with the drawings. The following embodiments are provided merely to illustrate the technical solutions of the present application more clearly, and thus are provided only as examples, and not to limit the protection scope of the present application.

Unless defined otherwise, all technical and scientific terms used herein have the same meaning as commonly understood by a skilled person in the art to which the present application belongs; the terms used herein are only for the purpose of describing particular embodiments and is not intended to limit the present application; the terms "comprising" and "including" and any variations thereof in the description, claims, and the above brief description of the drawings of the present application are intended to cover non-exclusive inclusion.

In the description of the embodiments of the present application, the technical terms "first", "second" and the like are merely used for distinguishing between different objects and are not to be understood as indicating or implying a relative importance or implicitly indicating a number, a particular order or a primary/secondary relationship of the indicated technical features. In the description of the embodiments of the present application, the meaning of "multiple" is two or more, unless specifically limited otherwise.

When referring to "an embodiment" herein, it means that a particular feature, structure, or characteristic described in connection with the embodiment may be included in at least one embodiment of the present application. The appearances of the phrase in various places in the description are not necessarily all referring to the same embodiment, nor are separate or alternative embodiments mutually exclusive of other embodiments. It is to be expressly and implicitly understood by a skilled person in the art that the embodiments described herein may be combined with other embodiments.

In the description of the embodiments of the present application, the term "and/or" is merely an association that describes associated objects, which indicates that there may be three kinds of relationships, e.g. A and/or B may indicate the following three cases: A alone, A and B together, and B alone. In addition, the character "/", as used herein, generally indicates a "or" relationship between the associated objects before and after it.

In the description of the embodiments of the present application, the term "multiple" refers to two or more (including two), and similarly, the term "multiple groups" refers to two or more (including two) groups, and the term "multiple pieces" refers to two or more (including two) pieces.

In the description of the embodiments of the present application, the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential" and the like indicate orientations or positional relationships based on the orientation or position relationships shown in the drawings, which are merely intended to facilitate the description of the embodiments of the present application and simplify the description, and not to indicate or imply that the referenced apparatuses or elements must have a particular orientation, be constructed and operated in a particular orientation, and therefore cannot be construed as limiting the embodiments of the present application.

In the description of the embodiments of the present application, unless expressly specified and limited otherwise, the technical terms "mounted", "interfaced", "connected", "fixed", and the like are to be interpreted broadly, for example, as a fixed connection, as a detachable connection, or as an integral connection, which may also be a mechanical connection or an electrical connection, may be a direct connection or an indirect connection through an intermediate medium, and may be an internal communication between two elements or an interaction between two elements. The specific meanings of the above terms in the embodiments of the present application can be understood by those of ordinary skills in the art according to specific circumstances.

In the field of new energy resources, a power battery may serve as a main power source for an electric apparatus (such as a vehicle, a ship or a spacecraft, etc.), while an energy storage battery may serve as a charging source for the electric apparatus, and thus the importance of the power battery and the energy storage battery is self-evident. By way of example and not limitation, in some application scenarios, the power battery may be a battery in the electric apparatus, and the energy storage battery may be a battery in a charging apparatus. For convenience of description, hereinafter, both the power battery and the energy storage battery may be collectively referred to as batteries.

Presently, batteries on the market are mostly rechargeable batteries, most commonly lithium batteries, such as lithium ion batteries or lithium ion polymer batteries, etc. When a battery is installed in an electric apparatus, the battery needs to be connected to a charging apparatus for charging if the remaining capacity of the battery is insufficient.

It should be noted that, in order to achieve rapid charging of a battery, the maximum voltage that can be supported by a present battery charging platform mounted correspondingly to a battery is higher and higher, for example, there has already been a high-voltage charging platform of 800 volts in an electric apparatus. However, the construction of charging apparatuses is a gradual process. In the commercial environment, the construction of charging apparatuses supporting high-voltage charging platforms is far from the production of electric apparatuses.

Therefore, after an electric apparatus is connected to a charging apparatus, the electric apparatus and the charging apparatus will adapt charging voltages to confirm whether the charging voltage of the charging apparatus is lower than the minimum charging voltage of the battery in the electric apparatus. When the charging voltage of the charging apparatus is lower than the minimum charging voltage of the battery in the electric apparatus, the charging apparatus cannot charge the electric apparatus.

Since most of early charging piles are low-voltage charging platforms, and arranged in urban central blocks and main traffic nodes, when a high-voltage platform electric vehicle travels in an area with a high coverage of low-voltage charging platforms, in order to improve the charging convenience of the electric vehicle, it is necessary to enable the high-voltage platform electric vehicle to be charged normally on the low-voltage charging platforms.

In order to solve the problem, in the related art, a boost module is additionally provided in an electric apparatus, and when the charging apparatus supports a low-voltage charging platform, a charging voltage input from the charging apparatus, after boosted by the boost module, is converted into a voltage signal adapted to the high-voltage platform, which will be used to charge the battery. However, this scheme requires a boost module for boosting a direct current voltage to be provided additionally within an electric vehicle, and the additional boost module will not only further increase the equipment volume of a battery management system of the electric vehicle, but also increase the complexity of the battery management system. Therefore, in the related art, for an electric vehicle, the provision of an additional boost module in the electric vehicle in order to enable the electric vehicle to adapt to charging piles of various voltage platforms increases the equipment volume and system complexity of the battery management system in the electric vehicle.

In order to solve the above-mentioned technical problems, embodiments of the present application provide a battery charging circuit, method, device and storage medium. The battery charging circuit provided by some embodiments of the present application will be described firstly.

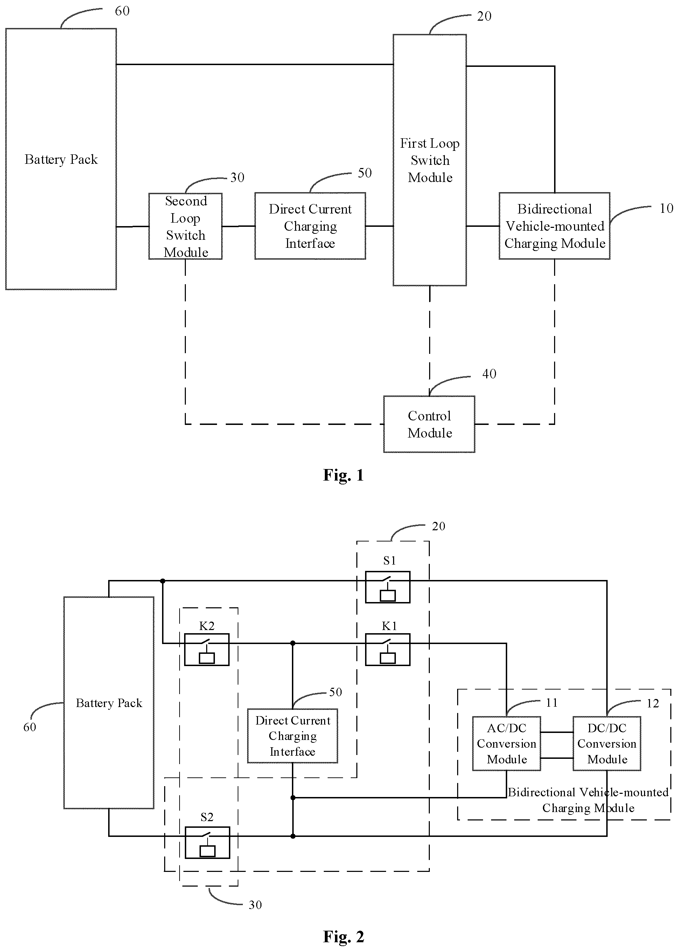

Fig. 1 shows a schematic block diagram of a battery charging circuit provided by an embodiment of the present application. The battery charging circuit includes a bidirectional vehicle-mounted charging module 10, a first loop switch module 20, a second loop switch module 30, and a control module 40.

When a charging pile is charging an electric vehicle, the first loop switch module 20, once turned on, can electrically connect a direct current charging interface 50 of the charging pile to a first end of the bidirectional vehicle-mounted charging module 10, and a second end of the bidirectional vehicle-mounted charging module 10 to a battery pack 60 of the electric vehicle.

When the charging pile is charging the electric vehicle, the second loop switch module 30, once turned on, can electrically connect the direct current charging interface 50 of the charging pile to the battery pack 60 of the electric vehicle.

The bidirectional vehicle-mounted charging module 10 can receive a direct current voltage output by the charging pile and boost the direct current voltage to be higher than a preset voltage.

When the charging pile is charging the electric vehicle, the control module 40 can detect the direct current voltage output by the charging pile, and control the first loop switch module 20 to be turned on or the second loop switch module 30 to be turned on, according to the magnitude of the direct current voltage.

The above-mentioned control module 40, after detecting the direct current voltage output by the charging pile, can control the first loop switch module 20 to be turned on or the second loop switch module 30 to be turned on according to whether the direct current voltage satisfies a preset charging condition of the battery pack 60. For example, the control module 40 can control the second loop switch module 30 to be turned on when the direct current voltage satisfies the preset charging condition of the battery pack 60; and control the first loop switch module 20 to be turned on when the direct current voltage does not satisfy the preset charging condition of the battery pack 60. It will be appreciated that the first loop switch module 20 and the second loop switch module 30 cannot be turned on at the same time.

When the second loop switch module 30 is turned on, a direct current voltage output directly from the direct current charging interface 50 of the charging pile can be used to charge the battery pack 60 of the electric vehicle.

When the first loop switch module 20 is turned on, the direct current charging interface 50 of the charging pile is connected to the battery pack 60 of the electric vehicle via the bidirectional vehicle-mounted charging module 10, and the direct current voltage output by the charging pile can be used to charge the battery pack 60 after being boosted by the bidirectional vehicle-mounted charging module 10.

The preset charging condition of the battery pack 60 may be that the direct current voltage is higher than the minimum charging voltage of the battery pack 60. That is, when the direct current voltage output by the charging pile is lower than the charging voltage of the battery pack 60, the control module 40 may control the direct current voltage to be boosted by the bidirectional vehicle-mounted charging module 10 to generate a direct current voltage higher than the preset voltage for charging the battery pack 60. When the direct current voltage output by the charging pile is higher than the charging voltage of the battery pack 60, the control module 40 may control the direct current voltage to charge the battery pack 60 directly. For example, the battery pack 60 of an electric vehicle may be a battery pack of 800 V, and the charging pile may be a high voltage charging platform or a low voltage charging platform. When the charging pile is a high-voltage charging platform, the direct current voltage output by the charging pile may be a direct current voltage of 800 V, which satisfies the minimum charging voltage of the battery pack 60, so that the battery pack 60 can be charged directly. However, when the charging pile is a low-voltage charging platform, the direct current voltage output by the charging pile may be a direct current voltage of 400 V, which does not satisfy the minimum charging voltage of the battery pack 60, so that the direct current voltage needs be boosted before charging the battery pack 60. It is to be understood that the preset voltage may be set to be higher than the minimum charging voltage of the battery pack 60, so that the direct current voltage after being boosted by the bidirectional vehicle-mounted charging module 10 can charge the battery pack 60. For example, the preset voltage may be set to be 750 V.

In the embodiment, by providing the bidirectional vehicle-mounted charging module 10, it is possible for the control module 40 to determine, according to the direct current voltage output by the charging pile, whether it is necessary to boost the direct current voltage for charging the battery pack 60. When it is necessary to boost the direct current voltage, the control module 40 can control the first circuit switch module 20 to be turned on so as to boost the direct current voltage via the bidirectional vehicle-mounted charging module 10. When it is not necessary to boost the direct current voltage, the control module 40 can control the second loop switch module 30 to be turned on, so that the battery pack 60 is charged directly with the direct current voltage output by the charging pile. Since the bidirectional vehicle-mounted charging module 10 is a vehicle-mounted module preset inside the electric vehicle, it is possible to boost the direct current voltage of the charging pile via a boost function of the bidirectional vehicle-mounted charging module 10 without additionally adding a boost module. When the electric vehicle is connected to the low voltage charging platform, the first loop switch module 20 is turned on, the direct current low voltage can be boosted by the bidirectional vehicle-mounted charging module 10 and then be used to charge the battery pack. When the electric vehicle is connected to the high-voltage charging platform, the second loop switch module 30 is turned on, so that the battery pack of the electric vehicle directly receives the direct current high voltage for charging. The electric vehicle can be charged in both the high-voltage charging platform and the low-voltage charging platform, so that the electric vehicle can be charged by different charging platforms. Also, it is possible to reduce the overall vehicle cost of the electric vehicle and reduce the complexity of the battery management system, since no additional boost module is added.

It will be appreciated that a fuse may be provided in the charging loop of the battery pack 60, which may be fused when the current abnormally increases, so as to disconnect the charging loop of the battery pack 60.

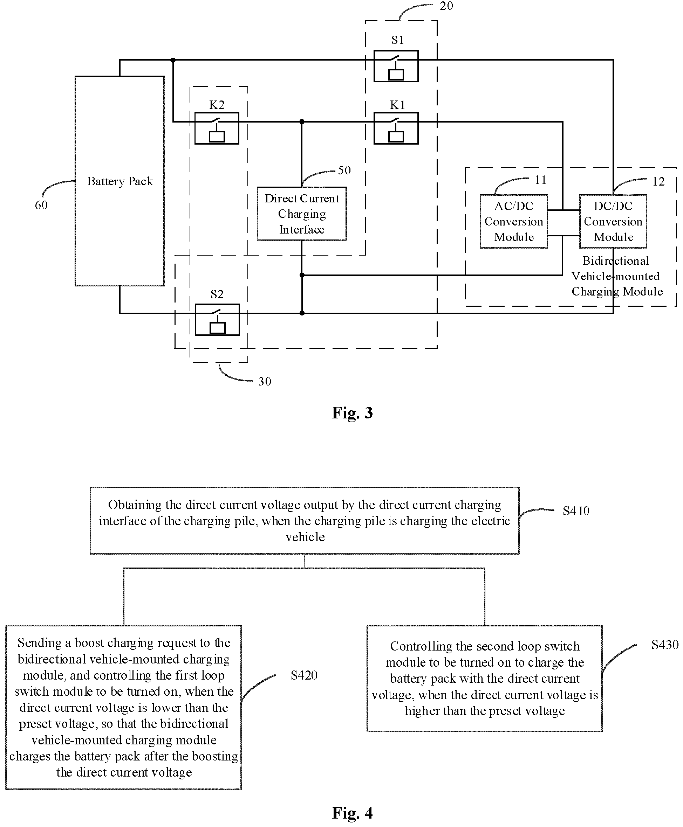

As shown in Fig. 2 and Fig. 3, in some embodiments, the bidirectional vehicle-mounted charging module 10 may include an alternating current (AC)/direct current (DC) conversion module 11 and a DC/DC conversion module 12 connected in series. The AC/DC conversion module 11 may include a direct current boost sub-module (not shown). The first end of the bidirectional vehicle-mounted charging module 10 may be an input end or an output end of the AC/DC conversion module 11.

The bidirectional vehicle-mounted charging module 10 can detect an input end voltage and an output end voltage of the AC/DC conversion module 11, and control the direct current boost sub-module of the AC/DC conversion module 11 to be turned on or off according to the input end voltage and the output end voltage.

In the bidirectional vehicle-mounted charging module 10, the direct current charging interface 50 of the charging pile may be connected to an input end of the AC/DC conversion module 11 or may be connected to an output end of the AC/DC conversion module 11. Fig. 2 shows that the first end of the bidirectional vehicle-mounted charging module 10 is the input end of the AC/DC conversion module 11, and Fig. 3 shows that the first end of the bidirectional vehicle-mounted charging module 10 is the output end of the AC/DC conversion module 11.

In order to confirm the connection topology between the direct current charging interface 50 of the charging pile and the bidirectional vehicle-mounted charging module 10, the control module 40 needs to detect the input end voltage and the output end voltage of the AC/DC conversion module 11, so as to determine how the direct current charging interface 50 of the charging pile is connected to the bidirectional vehicle-mounted charging module 10.

After the bidirectional vehicle-mounted charging module 10 detects the input end voltage and the output end voltage of the AC/DC conversion module 11, if it is determined that the direct current charging interface 50 of the charging pile is connected to the input end of the AC/DC conversion module 11, the direct current boost sub-module of the AC/DC conversion module 11 is controlled to be turned on, and the direct current voltage of the charging pile is boosted by the direct current boost sub-module firstly, and then further boosted by the DC/DC conversion module 12, so as to be a direct current voltage higher than the preset voltage.

If it is determined that the direct current charging interface 50 of the charging pile is connected to the output end of the AC/DC conversion module 11, the direct current boost sub-module of the AC/DC conversion module 11 is controlled to be turned off, and the direct current voltage of the charging pile is boosted to a direct current voltage higher than the preset voltage via the DC/DC conversion module 12 only.

In bidirectional vehicle-mounted charging modules 10 with different connection topologies, the actual topology of the bidirectional vehicle-mounted charging module 10 can be determined by detecting the input end voltage and the output end voltage of the AC/DC conversion module 11, and correspondingly, the direct current boost sub-module of the AC/DC conversion module 11 can be controlled to be turned on or off so as to adapt to the bidirectional vehicle-mounted charging modules 10 with different connection topologies.

As shown in Fig. 2, in some embodiments, the input end of the AC/DC conversion module 11 can be connected to the direct current charging interface 50 of the charging pile, the output end of the AC/DC conversion module 11 is connected to an input end of the DC/DC conversion module 12, and an output end of the DC/DC conversion module 12 is connected to the battery pack 60 of the electric vehicle via the first loop switch module 20.

After detecting the input end voltage and the output end voltage of the AC/DC conversion module 11, if the input end voltage is lower than the preset voltage and the output end voltage is lower than the preset voltage, the bidirectional vehicle-mounted module can control the direct current boost sub-module of the AC/DC conversion module 11 to be turned on, so as to boost the direct current voltage output by the charging pile sequentially via the direct current boost sub-module of the AC/DC conversion module 11 and the DC/DC conversion module 12.

It can be understood that a condition for the first loop switch module 20 to be turned on is that the direct current voltage output by the charging pile is lower than the minimum charging voltage of the battery pack 60, and since the preset voltage is higher than the minimum charging voltage, the direct current voltage output by the charging pile is lower than the preset voltage, too. Only when the first loop switch module 20 is turned on, the direct current charging interface 50 of the charging pile is connected to the bidirectional vehicle-mounted charging module 10, so that a voltage can be detected on the input end or the output end of the AC/DC conversion module 11. When it is detected that the input end voltage and the output end voltage of the AC/DC conversion module 11 are both lower than the preset voltage, it can be determined that the direct current charging interface 50 of the charging pile is connected to the input end of the AC/DC conversion module 11, and at this time, the direct current boost sub-module of the AC/DC conversion module 11 can be turned on so as to achieve two boosts via the direct current boost sub-module and the DC/DC conversion module 12.

As shown in Fig 3, in some embodiments, the input end of the DC/DC conversion module 12 may be connected to the direct current charging interface 50 of the charging pile, the output end of the AC/DC conversion module 11 is connected to the input end of the DC/DC conversion module 12, and the output end of the DC/DC conversion module 12 is connected to the battery pack 60 of the electric vehicle via the first loop switch module 20.

After detecting the input end voltage and the output end voltage of the AC/DC conversion module 11, if the input end voltage is zero and the output end voltage is lower than the preset voltage, the bidirectional vehicle-mounted charging module can turn off the direct current boost sub-module of the AC/DC conversion module 11, so as to boost the direct current voltage output by the charging pile via the DC/DC conversion module 12 alone.

Likewise, only when the first loop switch module 20 is turned on, the direct current charging interface 50 of the charging pile is connected to the bidirectional vehicle-mounted charging module 10, so that a voltage can be detected on the input end or the output end of the AC/DC conversion module 11. When the detected input end voltage of the AC/DC conversion module 11 is zero, and the output end voltage of the AC/DC conversion module 11 (i.e., the input end voltage of the DC/DC conversion module 12) is lower than the preset voltage, it can be determined that the direct current charging interface 50 of the charging pile is connected to the input end of the DC/DC conversion module 12, and at this time, the direct current boost sub-module of the AC/DC conversion module 11 can be turned off, and the boost can be achieved via the DC/DC conversion module 12 alone.

In some embodiments, a first electrode of the first end of the bidirectional vehicle-mounted charging module 10 may be connected to a first electrode of the direct current charging interface 50 of the charging pile, and a second electrode of the first end of the bidirectional vehicle-mounted charging module 10 may be connected to a second electrode of the direct current charging interface 50 of the charging pile.

The direct current charging interface 50 of the charging pile includes a positive electrode and a negative electrode, which are connected respectively to a positive electrode and a negative electrode of the first end of the bidirectional vehicle-mounted charging module 10, so as to output the direct current voltage to the bidirectional vehicle-mounted charging module 10. For example, the first electrode of DC charging interface 50 is the positive electrode and the second electrode of DC charging interface 50 is the negative pole; and the first electrode of the first end of the bidirectional vehicle-mounted charging module 10 is the positive electrode and the second electrode of the first end of the bidirectional vehicle-mounted charging module 10 is the negative electrode.

In some embodiments, the first loop switch module 20 may include a first contactor K1, a first relay S 1, and a second relay S2.

The first electrode of the first end of the bidirectional vehicle-mounted charging module 10 may be connected to the first electrode of the direct current charging interface 50 of the charging pile via the first contactor K1, a first electrode of the second end of the bidirectional vehicle-mounted charging module 10 may be connected to a first electrode of the battery pack 60 via the first relay S1, and a second electrode of the second end of the bidirectional vehicle-mounted charging module 10 may be connected to a second electrode of the battery pack 60 via the second relay S2.

The control module 40 may turn on the first loop switch module 20 by closing the first contactor Kl, the first relay S 1, and the second relay S2.

When the first contactor K1 is closed, the positive electrode and the negative electrode of the first end of the bidirectional vehicle-mounted charging module 10 are connected correspondingly to the positive electrode and the negative electrode of the positive electrode and the negative electrode of the, and the bidirectional vehicle-mounted charging module 10 can receive the direct current voltage output by the direct current charging interface 50 of the charging pile.

When the first relay S 1 and the second relay S2 are closed, the positive electrode and the negative electrode of the second end of the bidirectional vehicle-mounted charging module 10 are connected to the positive electrode and the negative electrode of the battery pack 60, and the bidirectional vehicle-mounted charging module 10 can boost the direct current voltage and output the boosted direct current voltage to supply power to the battery pack 60.

In some embodiments, the second loop switch module 30 may include a second contactor K2 and the second relay S2. The first electrode of the direct current charging interface 50 of the charging pile is connected to the first electrode of the battery pack 60 via the second contactor K2, and the second electrode of the direct current charging interface 50 of the charging pile is connected to the second electrode of the battery pack 60 via the second relay S2.

The control module 40 may turn on the second loop switch module 30 by closing the second contactor K2 and the second relay S2.

When the second contactor K2 and the second relay S2 are closed, the positive electrode and the negative electrode of the direct current charging interface 50 of the charging pile are connected to the positive electrode and the negative electrode of the battery pack 60, and the direct current voltage output by the direct current charging interface 50 of the charging pile can charge the battery pack 60 directly. The relay in the first loop switch module is multiplexed, so that device costs can be reduced, while the second loop switch module 30 can be turned on.

An embodiment of the present application provides a battery charging method, which can be applied to the control module of the battery charging circuit in the above-mentioned embodiments. As shown in Fig. 4, the battery charging method includes the following steps:
S410, obtaining the direct current voltage output by the direct current charging interface of the charging pile, when the charging pile is charging the electric vehicle;
S420, sending a boost charging request to the bidirectional vehicle-mounted charging module, and controlling the first loop switch module to be turned on, when the direct current voltage is lower than the preset voltage, so that the bidirectional vehicle-mounted charging module charges the battery pack after boosting the direct current voltage; and
S430, controlling the second loop switch module to be turned on to charge the battery pack with the direct current voltage, when the direct current voltage is higher than the preset voltage.

In the present embodiment, the control module may detect the direct current voltage output by the direct current charging interface when the charging pile is charging the electric vehicle. When the direct current voltage is higher than the preset voltage, the second loop switch module can be controlled to be turned on, so that the direct current charging interface outputs the direct current voltage to the battery pack via the second loop switch module for charging. When the direct current voltage is lower than the preset voltage, the first loop switch module can be controlled to be turned on, so that the direct current charging interface is connected to the bidirectional vehicle-mounted charging module via the first loop switch module, and charges the battery pack after the direct current voltage is boosted by the bidirectional vehicle-mounted charging module. It is possible to boost the direct current voltage of the charging pile via a boost function of the bidirectional vehicle-mounted charging module without additionally adding a boost module. When the electric vehicle is connected to the low voltage charging platform, the first loop switch module is turned on, the direct current low voltage can be boosted by the bidirectional vehicle-mounted charging module and then be used to charge the battery pack. When the electric vehicle is connected to the high-voltage charging platform, the second loop switch module is turned on, so that the battery pack of the electric vehicle directly receives the direct current high voltage for charging. The electric vehicle can be charged in both the high-voltage charging platform and the low-voltage charging platform, so that the electric vehicle can be charged by different charging platforms. Also, it is possible to reduce the overall vehicle cost of the electric vehicle and reduce the complexity of the battery management system, since no additional boost module is added.

In S410, the charging pile can be connected to the charging port of the electric vehicle via a charging gun, and output the direct current voltage to the charging port of the electric vehicle via the direct current charging interface of the charging pile.

In S420, when the direct current charging interface of the charging pile outputs the direct current voltage, the control module of the battery charging circuit can detect the magnitude of the direct current voltage and judge whether the direct current voltage is lower than the preset voltage. When the direct current voltage is lower than the preset voltage, the control module can determine that the charging pile is a low-voltage charging platform. When the electric vehicle is a high-voltage platform, the battery pack of the electric vehicle cannot be charged by directly connecting to the direct current charging interface of the charging pile. At this time, the control module may send a boost charging request to the bidirectional vehicle-mounted charging module and control the first loop switch module to be turned on. The bidirectional vehicle-mounted charging module can be electrically connected to the battery pack of the electric vehicle via the first loop switch module, and after receiving the boost charging request, the bidirectional vehicle-mounted charging module can receive the direct current voltage output by the direct current charging interface, and charge the battery pack after boosting the direct current voltage.

In S430, when the control module detects the direct current voltage output by the direct current charging interface of the charging pile, if the direct current voltage is higher than the preset voltage, the control module can control the second loop switch module to be turned on. The direct current charging interface of the charging pile can be directly connected to the battery pack via the second loop switch module and output the direct current voltage to charge the battery pack.

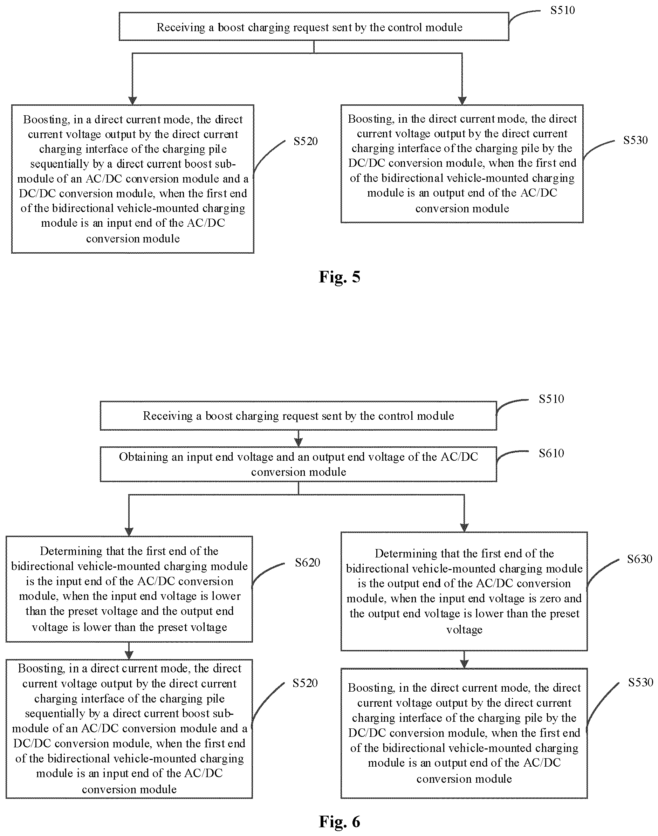

An embodiment of the present application provides a battery charging method, which can be applied to the bidirectional vehicle-mounted charging module of the battery charging circuit in the above-mentioned embodiments. As shown in Fig. 5, the battery charging method includes the following steps:
S510, receiving a boost charging request sent by the control module;
S520, boosting, in a direct current mode, the direct current voltage output by the direct current charging interface of the charging pile sequentially by a direct current boost sub-module of an AC/DC conversion module and a DC/DC conversion module, when the first end of the bidirectional vehicle-mounted charging module is an input end of the AC/DC conversion module; and
S530, boosting, in the direct current mode, the direct current voltage output by the direct current charging interface of the charging pile by the DC/DC conversion module, when the first end of the bidirectional vehicle-mounted charging module is an output end of the AC/DC conversion module.

In the present embodiment, the bidirectional vehicle-mounted charging module can receive the boost charging request sent by the control module, and judge whether the AC/DC conversion module is located in the boost loop. When the AC/DC conversion module is located in the boost circuit, the bidirectional vehicle-mounted charging module can control the direct current boost sub-module of the AC/DC conversion module to be turned on, so as to boost the direct current voltage through via the direct current boost sub-module and the DC/DC conversion module sequentially. When the AC/DC conversion module is not located in the boost loop, the bidirectional vehicle-mounted charging module can control the direct current boost sub-module of the AC/DC conversion module to be turned off, so as to boost the direct current voltage by the DC/DC conversion module alone. Bidirectional vehicle-mounted charging modules of different topologies are enabled to boost the direct current voltage by detecting whether the AC/DC conversion module is located in the boost loop, so as to realize the adaptation of the bidirectional vehicle-mounted charging modules of different topologies.

In S510, the bidirectional vehicle-mounted charging module can receive the boost charging request sent by the control module when being powered on. For example, a wake-up signal can be sent to the bidirectional vehicle-mounted charging module when the whole vehicle starts, and the bidirectional vehicle-mounted charging module can perform a low-voltage power-on self-test according to the wake-up signal. When receiving the boost charging request, the bidirectional vehicle-mounted charging module can detect the topology of the bidirectional vehicle-mounted charging module to determine whether the first end of the bidirectional vehicle-mounted charging module is the input end of the AC/DC conversion module or the output end of the AC/DC conversion module.

In S520, when the bidirectional vehicle-mounted charging module determines that its first end is the input end of the AC/DC conversion module, which indicates that both the AC/DC conversion module and the DC/DC conversion module are located in the boost loop, the bidirectional vehicle-mounted charging module can control the direct current boost sub-module of the AC/DC conversion module to be turned on, to boost, in the direct current mode, the direct current voltage output by the direct current charging interface of the charging pile sequentially by the direct current boost sub-module and the DC/DC conversion module. The direct current voltage, after being boosted twice, is output to the battery pack for charging.

In S530, when the bidirectional vehicle-mounted charging module determines that its first end is the output end of the AC/DC conversion module, which indicates that only the DC/DC conversion modules is located in the boost loop, and the AC/DC conversion module is not connected herein, the bidirectional vehicle-mounted charging module can control the direct current boost sub-module of the AC/DC conversion module to be turned off, to boost the direct current voltage output by the direct current charging interface of the charging pile via the DC/DC conversion module. The direct current voltage, after being boosted, is output to the battery pack for charging.

As an alternative embodiment, as shown in Fig. 6, before the step S520, the battery charging method may further include the following steps:
S610, obtaining an input end voltage and an output end voltage of the AC/DC conversion module;
S620, determining that the first end of the bidirectional vehicle-mounted charging module is the input end of the AC/DC conversion module, when the input end voltage is lower than the preset voltage and the output end voltage is lower than the preset voltage; and
S630, determining that the first end of the bidirectional vehicle-mounted charging module is the output end of the AC/DC conversion module, when the input end voltage is zero and the output end voltage is lower than the preset voltage.

In the present embodiment, the bidirectional vehicle-mounted charging module can determine whether the AC/DC conversion module is connected into the boost loop by detecting the input end voltage and the output end voltage of the AC/DC conversion module. When the bidirectional vehicle-mounted charging module may have different topology, the corresponding topology can be determined by detecting the voltage signal to adapt the bidirectional vehicle-mounted charging module.

In S610, the bidirectional vehicle-mounted charging module can detect the input end voltage and the output end voltage of the AC/DC conversion module when receiving the boost charging request.

In S620, when the bidirectional vehicle-mounted charging module detects voltages at both the input end and the output end of the AC/DC conversion module, and both the input end voltage and the output end voltage are lower than the preset voltage, it can be determined that the topology of the bidirectional vehicle-mounted charging module is that the bidirectional vehicle-mounted charging module is connected to the direct current charging interface via the input end of the AC/DC conversion module, i.e., the first end of the bidirectional vehicle-mounted charging module is the input end of the AC/DC conversion module.

In S630, when the bidirectional vehicle-mounted charging module does not detect a voltage at the input end of the AC/DC conversion module, but detects a voltage at the output end of the AC/DC conversion module, and the output end voltage is lower than the preset voltage, it can be determined that the topology of the bidirectional vehicle-mounted charging module is that the bidirectional vehicle-mounted charging module is connected to the direct current charging interface via the input end of the DC/DC conversion module, i.e., the first end of the bidirectional vehicle-mounted charging module is the output end of the AC/DC conversion module.

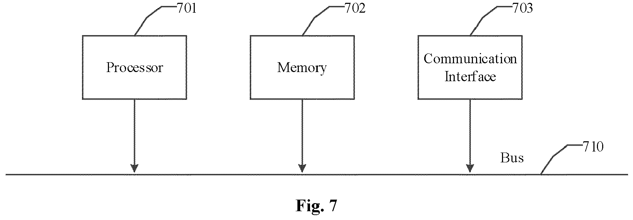

Fig. 7 is a schematic hardware structure diagram of a battery charging device provided by an embodiment of the present application.

The battery charging device may include a processor 701 and a memory 702 having computer program instructions stored thereon.

In particular, the processor 701 may include a central processing unit (CPU), or a specific integrated circuit (Application Specific Integrated Circuit, ASIC), or one or more integrated circuits that may be configured to implement the embodiments of the present application.

The memory 702 may include a mass memory for data or instructions. By way of example and not limitation, the memory 702 may include a hard disk drive (Hard Disk Drive, HDD), a floppy disk drive, a flash memory, an optical disk, a magneto-optical disk, a magnetic tape, or a universal serial bus (Universal Serial Bus, USB) drive, or a combination of two or more of the above. Where appropriate, the memory 702 may include a removable or non-removable (or fixed) medium. Where appropriate, the memory 702 may be internal or external to an integrated gateway disaster tolerance device. In a particular embodiment, the memory 702 may be a nonvolatile solid-state memory.

The memory may include a read only memory (ROM), a random access memory (RAM), a magnetic disk storage media device, an optical storage media device, a flash memory device, an electrical, optical, or other physical/tangible memory storage device. Thus, in general, the memory may include one or more tangible (non-transitory) readable storage media (e.g. a memory devices) encoded with software including computer-executable instructions, and the software, when executed (e.g. by one or more processors), is operable to perform the operations described with reference to a method according to an aspect of the disclosure.

The processor 701 can implement any of the battery swapping control methods in the above-described embodiments, by reading and executing the computer program instructions stored in the memory 702.

In one example, the battery charging device may further include a communication interface 703 and a bus 710. As shown in Fig. 10, the processor 701, the memory 702, and the communication interface 703 are connected and communicate with each other via the bus 710.

The communication interface 703 is used primarily to enable communication between various modules, apparatuses, units, and/or devices in embodiments of the present application.

The bus 710 may include hardware, software, or both, and couple the components of the battery charging device together. By way of example and not limitation, the bus may include an accelerated graphics port (AGP) or other graphics bus, an enhanced Industry Standard Architecture (EISA) bus, a front side bus (FSB), a HyperTransport (HT) interconnect, an Industry Standard Architecture (ISA) bus, an Infiniband interconnect, a low LPC bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association local (VLB) bus, or other suitable bus, or a combination of two or more of these. The bus 710 may include one or more buses, as appropriate. Although embodiments of the present application describe and illustrate a particular bus, the present application contemplates any suitable bus or interconnect.

The battery charging device may be based on the above-described battery power supply system to implement the battery swapping control methods described in conjunction with Figs. 8 to 9.

In addition, in conjunction with the battery swapping control methods in the above-described embodiments, an embodiment of the present application can provide a computer storage medium to implement the methods. The computer storage medium stores computer program instructions; the computer program instructions, when executed by a processor, implement any of the battery swapping control methods in the above-described embodiments.

The functional blocks shown in the structure block diagrams described above may be implemented in hardware, software, firmware, or a combination thereof. When implemented in hardware, the blocks may be, for example, electronic circuits, application specific integrated circuits (ASICs), appropriate firmware, plug-ins, function cards, etc. When implemented in software, the elements of the present application are programs or code segments to perform the required tasks. The programs or code segments can be stored in a machine-readable medium or transmitted over a transmission medium or a communication link by a data signal embodied in a carrier wave. A "machine-readable medium" may include any medium that can store or transmit information. Examples of the machine-readable medium include an electronic circuit, a semiconductor memory device, an ROM, a flash memory, an erasable ROM (EROM), a floppy diskette, a CD-ROM, an optical disk, a hard disk, a fiber optic medium, a radio frequency (RF) link, etc. The code segments may be downloaded via a computer network such as the Internet, an intranet, etc.

It should be noted that, in this document, the terms "comprising", "including", or any other variation thereof, are intended to cover non-exclusive inclusion, so that a process, method, article, or device including a series of elements does not include only those elements but may include other elements not expressly listed, or may include elements inherent to such process, method, article, or device.

While the principles and embodiments of the present application have been described herein using specific examples, the foregoing description of the examples has been presented only to aid in understanding the methodology and core concepts of the present application. The above are merely preferred embodiments of the present application, and it should be noted that due to the limited nature of the wording, there is objectively an unlimited specific structure; for a person of ordinary skills in the art, without departing from the principle of the present application, several improvements, refinements or changes can be made, and the above-mentioned technical features can be combined in an appropriate manner; such modifications, variations or combinations, or any direct application of the concepts or technical solutions disclosed herein without modification are intended to be within the protection scope of the present application.

## Claims

1. A battery charging circuit, applicable to an electric vehicle, the battery charging circuit comprising:
a bidirectional vehicle-mounted charging module;
a first loop switch module, configured to, once turned on, electrically connect a direct current charging interface of a charging pile to a first end of the bidirectional vehicle-mounted charging module, and a second end of the bidirectional vehicle-mounted charging module to a battery pack of the electric vehicle, when the charging pile is charging the electric vehicle;
a second loop switch module, configured to, once turned on, electrically connect the direct current charging interface of the charging pile to the battery pack of the electric vehicle, when the charging pile is charging the electric vehicle;
the bidirectional vehicle-mounted charging module, configured to boost a direct current voltage output by the charging pile to be higher than a preset voltage; and
a control module, configured to control the first loop switch module to be turned on or the second loop switch module to be turned on, according to the direct current voltage of the charging pile.

2. The battery charging circuit according to claim 1, wherein the bidirectional vehicle-mounted charging module comprises an alternating current (AC)/direct current (DC) conversion module and a DC/DC conversion module connected in series, and the AC/DC conversion module comprises a direct current boost sub-module; the first end of the bidirectional vehicle-mounted charging module is an input end or an output end of the AC/DC conversion module; and
the bidirectional vehicle-mounted charging module is specifically configured to detect an input end voltage and an output end voltage of the AC/DC conversion module, so as to turn on or off the direct current boost sub-module of the AC/DC conversion module according to the input end voltage and the output end voltage.

3. The battery charging circuit according to claim 2, wherein the input end of the AC/DC conversion module is configured to connect to the direct current charging interface of the charging pile, the output end of the AC/DC conversion module is connected to an input end of the DC/DC conversion module, an output end of the DC/DC conversion module is connected to the battery pack of the electric vehicle via the first loop switch module; and
the bidirectional vehicle-mounted charging module is configured to detect the input end voltage and the output end voltage of the AC/DC conversion module, and boost, in a direct current mode, the direct current voltage sequentially by the direct current boost sub-module of the AC/DC conversion module and the DC/DC conversion module, when the input end voltage is lower than the preset voltage and the output end voltage is lower than the preset voltage.

4. The battery charging circuit according to claim 2, wherein an input end of the DC/DC conversion module is configured to connect to the direct current charging interface of the charging pile, the input end of the DC/DC conversion module is connected to the output end of the AC/DC conversion module, and an output end of the DC/DC conversion module is connected to the battery pack of the electric vehicle via the first loop switch module;
the bidirectional vehicle-mounted charging module is configured to detect the input end voltage and the output end voltage of the AC/DC conversion module, and boost, in a direct current mode, the direct current voltage by the DC/DC conversion module, when the input end voltage is zero and the output end voltage is lower than the preset voltage.

5. The battery charging circuit of claim 1, wherein a first electrode of the first end of the bidirectional vehicle-mounted charging module is connected to a first electrode of the direct current charging interface of the charging pile, and a second electrode of the first end of the bidirectional vehicle-mounted charging module is connected to a second electrode of the direct current charging interface of the charging pile.

6. The battery charging circuit according to claim 5, wherein the first loop switch module comprises:
a first contactor, via which, the first electrode of the first end of the bidirectional vehicle-mounted charging module is connected to the first electrode of the direct current charging interface of the charging pile;
a first relay, via which, a first electrode of the second end of the bidirectional vehicle-mounted charging module is connected to a first electrode of the battery pack; and
a second relay, via which, a second electrode of the second end of the bidirectional vehicle-mounted charging module is connected to a second electrode of the battery pack; and
when the first loop switch module is turned on, the first contactor, the first relay and the second relay are closed.

7. The battery charging circuit according to claim 6, wherein the second loop switch module comprises:
a second contactor, via which, the first electrode of the direct current charging interface of the charging pile is connected to the first electrode of the battery pack; and
the second relay, via which, the second electrode of the direct current charging interface of the charging pile is connected to the second electrode of the battery pack; and
when the second loop switch module is turned on, the second contactor and the second relay are closed.

8. A battery charging method, applicable to the control module of the battery charging circuit according to any one of claims 1-7, the method comprising:
obtaining the direct current voltage output by the direct current charging interface of the charging pile, when the charging pile is charging the electric vehicle;
sending a boost charging request to the bidirectional vehicle-mounted charging module, and controlling the first loop switch module to be turned on, when the direct current voltage is lower than the preset voltage, so that the bidirectional vehicle-mounted charging module charges the battery pack after the boosting the direct current voltage; and
controlling the second loop switch module to be turned on to charge the battery pack with the direct current voltage, when the direct current voltage is higher than the preset voltage.

9. A battery charging method, applicable to the bidirectional vehicle-mounted charging module of the battery charging circuit according to any one of claims 1-7, the method comprising:
receiving a boost charging request sent by the control module;
boosting, in a direct current mode, the direct current voltage output by the direct current charging interface of the charging pile sequentially by a direct current boost sub-module of an AC/DC conversion module and a DC/DC conversion module, when the first end of the bidirectional vehicle-mounted charging module is an input end of the AC/DC conversion module; and
boosting, in the direct current mode, the direct current voltage output by the direct current charging interface of the charging pile by the DC/DC conversion module, when the first end of the bidirectional vehicle-mounted charging module is an output end of the AC/DC conversion module.

10. The battery charging method according to claim 9, wherein before boosting, in the direct current mode, the direct current voltage output by the direct current charging interface of the charging pile sequentially by the direct current boost sub-module of the AC/DC conversion module and the DC/DC conversion module, when the first end of the bidirectional vehicle-mounted charging module is the input end of the AC/DC conversion module, the method further comprises:
obtaining an input end voltage and an output end voltage of the AC/DC conversion module;
determining that the first end of the bidirectional vehicle-mounted charging module is the input end of the AC/DC conversion module, when the input end voltage is lower than the preset voltage and the output end voltage is lower than the preset voltage; and
determining that the first end of the bidirectional vehicle-mounted charging module is the output end of the AC/DC conversion module, when the input end voltage is zero and the output end voltage is lower than the preset voltage.

11. A battery charging device, comprising: a processor and a memory having computer program instructions stored thereon;
wherein the processor, when executing the computer program instructions, causes the battery charging device to implement the battery charging method of claims 8-10.

12. A computer storage medium having computer program instructions stored thereon, which, when executed by an electronic device, cause the electronic device to implement the battery charging method of claims 8-10.
